(19) Europäisches Patentamt
European Patent Office
Office européen des brevets

(11) Publication number: **0 068 487**
**B1**

(12) **EUROPEAN PATENT SPECIFICATION**

(45) Date of publication of patent specification: **30.12.86**

(21) Application number: **82105734.6**

(22) Date of filing: **28.06.82**

(51) Int. Cl.$^4$: **C 08 F 299/02,** C 08 F 299/04, C 08 F 299/06, C 08 F 220/20, C 08 F 220/56, C 08 L 101/00, B 29 C 45/00

# (54) Curable molding compositions.

(30) Priority: **29.06.81 US 278902**

(43) Date of publication of application:
**05.01.83 Bulletin 83/01**

(45) Publication of the grant of the patent:
**30.12.86 Bulletin 86/52**

(84) Designated Contracting States:
**AT BE CH DE FR GB IT LI LU NL SE**

(56) References cited:
**EP-A-0 018 637**
**US-A-3 287 292**
**US-A-3 760 033**

**CHEMICAL ABSTRACTS, vol. 77, no. 20, 13th November 1972, page 30, no. 127462x, Columbus, Ohio, USA**

**The file contains technical information submitted after the application was filed and not included in this specification**

(73) Proprietor: **UNION CARBIDE CORPORATION**
**39 Old Ridgebury Road**
**Danbury Connecticut 06817 (US)**

(72) Inventor: **Domeier, Linda Ann**
**5 Farm Road Apt. 164**
**Somerville New Jersey 08876 (US)**

(74) Representative: **Weinhold, Peter, Dr. et al**
**Patentanwälte Dr. V. Schmied-Kowarzik Dipl.-Ing. G. Dannenberg Dr. P. Weinhold Dr. D. Gudel Dipl.-Ing. S. Schubert Dr. P. Barz**
**Siegfriedstrasse 8**
**D-8000 München 40 (DE)**

**EP 0 068 487 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention is directed to curable molding compositions suitable for the rapid fabrication of fiber-reinforced thermoset resin articles having improved mechanical properties. As is well understood by those skilled in the art of forming thermoset resin articles by a free radical curing reaction, the structure of a thermoset resin is a three dimensional network commonly formed via the free-radical cross-linking reaction of a polyunsaturated oligomer, and in most cases, an ethylenically unsaturated monomer. Unsaturated polyester resins, for example, are widely utilized in making fiber reinforced articles. These unsaturated polyester resins are co-reacted with an ethylenically unsaturated monomer, such as styrene. A relatively insoluble and infuseable thermoset resin structure results. When this resin structure is used as a matrix for fibers, the fibers are locked within the framework of the molded article and reinforce the molded articles. This technology is well developed in the art and understood by the skilled artisan.

The combination of components in the composition of this invention have been found to produce reinforced articles having a particularly good balance of mechanical properties. Molded reinforced articles may be produced from the composition of this invention by a very rapid mold cycle which is typically less than 2 minutes from the time the cure of the resin is initiated.

The Invention

This invention is directed to curable molding compositions used for the rapid fabrication of fiber-reinforced thermoset resin articles having improved mechanical properties.

It has now been found that when a comonomer, i.e., acrylic or methacrylic acid or a functionalized derivative thereof, is added to a thermosetting composition containing a thermosettable organic material with two more polymerizable carbon-carbon double bonds and an ethylenically unsaturated monomer, the resulting resin compositions produce reinforced articles having substantially improved mechanical properties than those of composites which do not contain these particular comonomers.

The improved curable molding composition of this invention comprises a mixture of:

(a) a thermosettable organic material containing two or more polymerizable carbon-carbon double bonds,

(b) 2-hydroxyethyl acrylate and/or 2-hydroxyethyl methacrylate and

(c) styrene and/or at least one of its derivatives and/or at least one of its homologues.

The molding compositions of this invention are particularly suitable for the rapid fabrication of glass reinforced resin articles having improved mechanical properties.

A novel process for such rapid fabrication is described in EP—A—80 102 354.0. In said process, the fiber reinforcement is comprised of one or more fibers with a melting point or a transition temperature above about 130°C. The process comprises the steps of (a) providing in a heatable matched metal die mold, a bonded web of one or more of said fibers, (b) providing in an accumulator zone, a liquid body of a thermosettable organic material having a viscosity determined at 120°C, in the absence of curing agent of less than 100 mPa.s, and which is curable upon heating to a thermoset resin composition, the viscosity of said liquid body being maintained essentially constant in the accumulator zone by keeping its temperature below that at which curing of said materials is substantial, (c) closing said mold containing said web, (d) injecting at least a portion of said thermosettable organic material under pressure from said accumulator zone into the mold to thereby fill the cavity in said mold, (e) initiating the curing of said materials by subjecting the materials to a temperature by heating the mold, which is above the temperature at which the curing of said materials is initiated, and (f) opening said mold and removing the cured thermoset article therefrom. The fiber reinforcement may be from 10 to 75 weight percent of the weight of the molded article which is removed from the mold.

The improved process of the present invention is characterized by the use of a resin composition comprising a mixture of:

(a) a thermosettable organic material containing two or more polymerizable carbon-carbon double bonds,

(b) 2-hydroxyethyl acrylate and/or 2-hydroxyethyl methacrylate and

(c) styrene and/or at least one of its derivatives and/or at least one of its homologues.

A major requirement for the process is low resin viscosity to avoid movement of the reinforcing fibers during resin injection. Many types of resins can be used in the resin injection process described in EP—A—80102 354.0.

The required low viscosity of these resins is generally achieved by adding an ethylenically unsaturated monomer, principally styrene, to the resin.

The instant resin compositions have low viscosities, i.e., less than about 150, preferably less than 100 mPa.s, so that they can be used to produce thermoset resin articles containing up to 75 weight percent of reinforcing fibers by a very rapid mold cycle.

The thermosettable organic material containing two or more polymerizable carbon-carbon double bonds may be selected from one or more of the following materials:

(1) An unsaturated polyester. These polyesters are typically the condensation products prepared from a diol and an unsaturated difunctional carboxylic acid or anhydride. The diol is generally selected from ethylene glycol, diethylene glycol, propylene glycol, dipropylene glycol, neopentyl glycol, alkoxylated

derivatives of bisphenol-A, 2,2,4-trimethyl-1,3-pentanediol, 2,2-dimethyl-3-hydroxypropyl 2,2-dimethyl-3-hydroxypropionate, and 1,3-butanediol. The unsaturated acids include maleic acid and fumaric acid. Acids without reactive double bonds which may be used in modifying amounts include phthalic acid, isophthalic acid, terephthalic acid, and adipic acid. Anhydrides of the above acids, such as maleic anhydride and phthalic anhydride are often used. Additionally, mixtures of diols and unsaturated and saturated acids may be used.

The unsaturated polyesters are generally prepared by heating approximately equimolar amounts of the diol with the carboxylic acid or anhydride at temperatures in excess of about 200°C for periods of 4 to 24 hours. The polyesters typically have number average molecular weights (Mn) in the range of from 500 to 5000, and they contain unsaturation distributed along the chain. These polyesters have acid numbers in the range of from 8 to 50. (The acid number is the milligrams of potassium hydroxide needed to neutralize one gram of sample). Many of the polyesters have hydroxyl numbers approximately equal to or greater than their acid numbers.

An additional group of polyesters also contemplated for use herein are prepared by incorporating dicyclopentadiene into the backbone of the polyester. These polyesters are described, for example, in U.S. Patents 4,029,848; 4,148,765 and 4,224,430.

(2) An unsaturated half-ester of a hydroxyl-terminated polyester oligomer characterized by the following empirical formula:

$$[HO\overset{\overset{O}{\|}}{C}-CH=CH\overset{\overset{O}{\|}}{C}-O\,]_{n}R(OH)_{m} \qquad (I)$$

wherein n has an average value between 1.5 and 2, m is 2—n, R is the hydroxyl-free residue of a predominantly hydroxyl-terminated polyester oligomer having a molecular weight not exceeding about 1500 and obtained by the condensation of a diol with a dicarboxylic acid or anhydride.

These are described in EP—A—80 102 354.0.

The predominantly hydroxyl-terminated polyester oligomer used to produce the half ester is typically prepared from (a) a diol selected from the class consisting of 1,2-propylene glycol, 1,3-butanediol, 2,2-dimethyl-1,3-propanediol, dipropylene glycol, diethylene glycol, 2,2-dimethyl-3-hydroxypropyl 2,2-dimethyl-3-hydroxypropionate, and mixtures thereof, and mixtures of ethylene glycol and the aforementioned diols, and (b) a dicarboxylic acid or anhydride selected from the class consisting of maleic acid and anhydride, fumaric acid, orthophthalic acid and anhydride, isophthalic acid, terephthalic acid, bicyclo[2.2.1]hept-5-ene-2,3-dicarboxylic acid and bicyclo[2.2.1]hept-5-ene-2,3-dicarboxylic acid anhydride, and mixtures thereof. The diol and dicarboxylic acid or anhydride are heated until a polyester is formed possessing an acid number of less than 15, preferably less than 10 and most preferably, less than 5. When the molar ratio of diols to dicarboxylic acids is greater than 1.5, the hydroxyl number is typically in excess of 65, and most desirably in excess of 100. Hydroxyl numbers for the hydroxyl terminated polyester oligomer can be as high as 250 and greater. Polyester esterification catalysts such as amines or tin compounds may optionally be used to increase the rate of formation of the polyester.

The half ester of formula (I) is conveniently prepared by reacting the predominantly hydroxyl-terminated polyester oligomer with maleic anhydride in a stoichiometric ratio of one mole of hydroxyl per 0.75 to 1.2 moles of maleic anhydride. A catalyst may optionally be used to carry out this reaction. These catalysts include tin compounds and amine compounds.

(3) A half ester of an organic polyol characterized by the following empirical formula:

$$(HO-\overset{\overset{O}{\|}}{C}-CH=CH\overset{\overset{O}{\|}}{C}-O\,)_{a}R_1(OH)_{b} \qquad (II)$$

wherein a is a number having an average value of 1.5 to less than 4, b is equal to the free valence of $R_1$ less the average value of a, $R_1$ is the hydroxyl-free residue of an organic polyol which contained from 2 to 4 inclusive, hydroxyl groups, OH, in formula (II).

The organic polyol which is reacted with the maleic anhydride to form the half ester depicted by empirical formula (II) contains at least two carbon atoms and which may contain from 2 to 4, inclusive, hydroxyl groups. These polyols include alkane diols, triols, tetraols, aliphatic ether containing diols, triols, tetraols, cycloaliphatic containing diols, triols, and tetraols, and aromatic containing diols, triols, and tetraols. Specific illustrations of organic polyols suitable in the practice of this invention include the following: ethylene glycol, diethylene glycol, 2,2,4-trimethyl-1,3-pentane diol, dipropylene glycol, propylene glycol, polypropylene glycol having an average molecular weight of about 150 to about 600, triethylene glycol, 1,4-cyclohexane dimethanol, neopentyl glycol, 2,2-dimethyl-3-hydroxypropyl 2,2-dimethyl-3-hydroxypropionate, the ethylene and propylene oxide adducts of 2,2-dimethyl-3-hydroxypropyl 2,2-dimethyl-3-hydroxypropionate, triethanolamine, 1,3-butanediol, tetraethylene glycol, 2,2-bis(4-hydroxyphenyl)propane and the ethylene and propylene oxide adducts of 2,2-bis(4-hydroxyphenyl)propane, pentaerythritol, erythritol, glycerine, trimethylolpropane, 1,4-butanediol, 1,6-hexanediol,

the polycaprolactone ester of a polyol in which from 1 to 5, preferably from 1.5 to 4.0 equivalents of caprolactone are esterified with a polyol (as described in, for example, U.S. Patent 3,169,045) such as trimethylolpropane or diethylene glycol (preferably the polycaprolactone ester of a polyol is the polycaprolactone ester of trimethylolpropane in which about 1.5 equivalents of caprolactone are reacted with trimethylolpropane or the polycaprolactone ester of trimethylolpropane where about 3.6 equivalents of caprolactone are esterified with trimethylolpropane), 2-ethyl-1,3-hexanediol, 1,5-pentanediol, tripropylene glycol, 2,2-bis(4-hydroxycyclohexyl)propane, 1,2,6-hexane triol or 1,3-propane diol.

These are described in U.S. Patent 4,263,413.

These half esters may also be blended with a polyepoxide or an unsaturated polyester.

(4) A poly(acrylate) characterized by the following empirical formula:

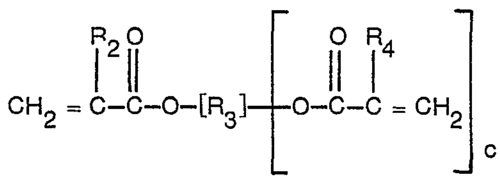

(III)

wherein $R_3$ is the hydroxy-free residue of an organic polyhydric alcohol which contained alcoholic hydroxyl groups bonded to different carbon atoms, $R_2$ and $R_4$ are independently hydrogen or methyl, and c is 1 to 3.

The polyhydric alcohol suitable for preparing the poly(acrylate) typically contains at least two carbon atoms and may contain from 2 to 4, inclusive, hydroxyl groups. These polyhydric alcohols include alkane diols, triols, tetraols, aliphatic ether containing diols, triols, tetraols, cycloaliphatic containing diols, triols, and tetraols, and aromatic containing diols, triols, and tetraols. Specific illustrations of organic polyols suitable in the practice of this invention include the following: ethylene glycol, diethylene glycol, 2,2,4-trimethyl-1,3-pentanediol, dipropylene glycol, propylene glycol, polypropylene glycol having an average molecular weight of 150 to 600, triethylene glycol, 1,4-cyclohexane dimethanol, neopentyl glycol, 2,2-dimethyl-3-hydroxypropyl 2,2-dimethyl-3-hydroxypropionate, polyethylene glycol having an average molecular weight of 150 to 600, 2,2-bis[4-(2-hydroxyethoxy)phenyl]propane, 2,2-bis[4-(2-hydroxypropoxy)phenyl]propane, triethanolamine, 1,3-butanediol, tetraethylene glycol, 2,2-bis(4-hydroxyphenyl)propane, glycerine, trimethylolpropane, 1,4-butanediol, the polycaprolactone ester of trimethylolpropane which contains about 1.5 equivalents of caprolactone ester, the polycaprolactone ester of trimethylolpropane which contains about 3.6 equivalents of caprolactone, 2-ethyl-1,3-hexanediol, 1,5-pentanediol, tripropylene glycol, 2,2-bis-(4-hydroxycyclohexyl)propane, 1,2,6-hexane triol, 1,3-propanediol and 1,6-hexanediol. Mixtures of the aforementioned polyols may also be used in this invention.

The poly(acrylate) of the aforementioned organic polyhydric alcohol can be prepared by the reaction of acrylic acid or methacrylic acid or their simple esters with the polyhydric alcohol under conditions well known in the art. Poly(acrylates) produced by the addition of acrylic or methacrylic acid across ethylenically unsaturated bonds, such as in dicyclopentadiene diacrylate or dimethacrylate may also be used in the practice of this invention.

(5) A vinyl ester resin produced by the addition of an unsaturated monocarboxylic acid to a polyepoxide.

The vinyl ester resins which may be used in this invention are produced from the addition of an unsaturated monocarboxylic acid to a polyepoxide, and have molecular weights greater than 300. These vinyl ester resins are well known in the art and many are commercially available. These are described in, for example, U.S. Patents 3,377,406; 3,637,618; 4,197,340 and 3,317,365, and 3,373,075.

The unsaturated carboxylic acid which may be used includes acrylic acid, methacrylic acid, crotonic acid, and acids prepared from the reaction of hydroxyalkyl acrylates or methacrylates with maleic anhydride and phthalic anhydride.

The polyepoxides may be saturated or unsaturated, aliphatic, cycloaliphatic, aromatic or heterocyclic and may be substituted, if desired, with non-interfering substituents, such as halogen atoms, hydroxyl groups and ether radicals.

The epoxides which may be used herein include: glycidyl ethers of novolac resins, i.e., phenol-aldehyde condensates. Preferred resins of this type are those of the formula:

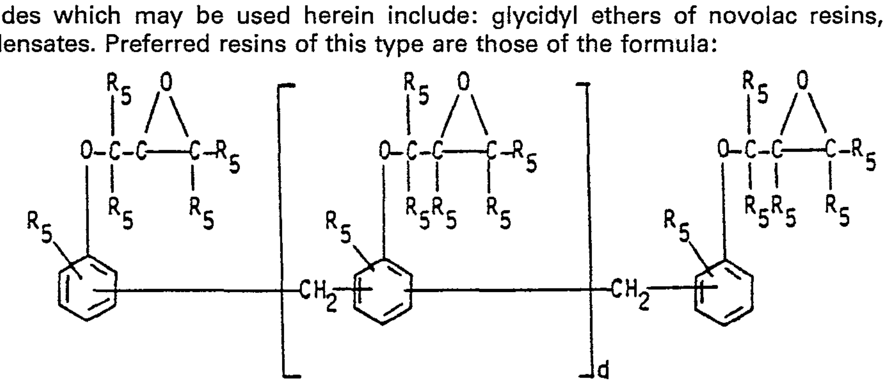

wherein $R_5$ is hydrogen or an alkyl radical and d has a value of from 0.1 to 5, and preferably less than 1.0. Preparation of these polyepoxides is illustrated in, for example, U.S. Patents 2,216,099 and 2,658,885.

Other groups of epoxy-containing compounds suitable for use herein include: the epoxidized esters of the polyethylenically unsaturated monocarboxylic acids such as epoxidized linseed or soybean oil, methyl linoleate and monoglycerides of tung oil fatty acids; the epoxidized esters of unsaturated monohydric alcohols and polycarboxylic acids such as di(2,3-epoxyoctyl)pimelate and the like; epoxidized esters of unsaturated alcohols and unsaturated carboxylic acids such as 3,4-epoxycyclohexylmethyl-3,4-epoxycyclohexane carboxylate; epoxidized derivatives of polyethylenically unsaturated polycarboxylic acids such as dimethyl 8,9,12,13-diepoxyeicosanedioate; epoxidized polyesters obtained by reacting an unsaturated polyhydric alcohol and/or unsaturated polycarboxylic acid or anhydride such as the polyester obtained by reacting 8,9,12,13-eicosanedienedioic acid with ethylene glycol; and epoxidized polyethylenically unsaturated hydrocarbons such as the epoxidized 2,2-bis(2-cyclohexenyl)propane and epoxidized dimer of cyclopentadiene.

A preferred polyepoxide includes the glycidyl polyethers of polyhydric phenols and polyhydric alcohols. Especially preferred are the diglycidyl polyethers of 2,2-bis(4-hydroxyphenyl)propane having the following formula:

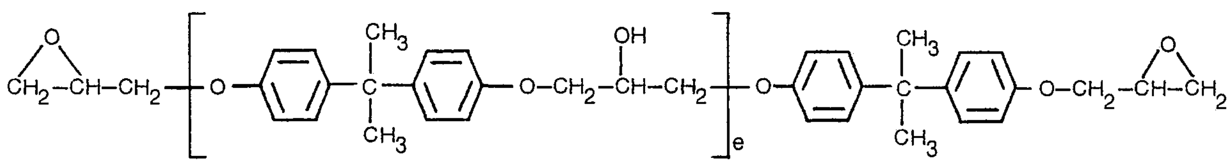

wherein e has values so that the average molecular weight of the saturated polyepoxide is from 340 to 2000. Acid modified vinyl ester resins may also be included in this invention. These are described, for example, in U.S. Patents 3,634,542; 3,548,030 and 3,564,074.

(6) A urethane poly(acrylate) characterized by the following empirical formula:

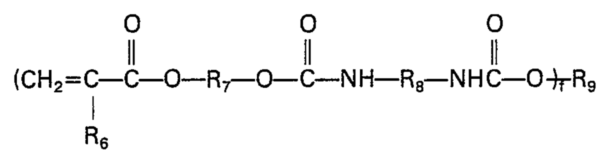

wherein $R_6$ is hydrogen or methyl; $R_7$ is a linear or branched divalent alkylene or oxyalkylene radical having from 2 to about 5 carbon atoms; $R_8$ is a divalent radical remaining after reaction of a substituted or unsubstituted diisocyanate; $R_9$ is the hydroxyl-free residue of an organic polyhydric alcohol which contained hydroxyl groups bonded to different carbon atoms; and f has an average value of from 2 to 4. These compounds are typically the reaction products of a polyol in which the hydroxyl groups are first reacted with a diisocyanate using one equivalent of diisocyanate per hydroxyl group, and the free isocyanate groups are then reacted with a hydroxyalkyl ester of acrylic or methacrylic acid.

The polyhydric alcohol suitable for preparing the urethane poly(acrylate) typically contains at least two carbon atoms and may contain from 2 to 4, inclusive, hydroxyl groups. Such polyols are described in resins (3) and (4) *supra*. A preferred polyol is one based on the polycaprolactone ester of a polyhydric alcohol such as described in, for example, U.S. Patent. 3,169,945. Unsaturated polyols may also be used.

Diisocyanates suitable for preparing the urethane poly(acrylate)s are well known in the art and include aromatic, aliphatic, and cycloaliphatic diisocyanates. Such diisocyanates may be extended with small amounts of glycols to lower their melting point and provide a liquid diisocyanate.

The hydroxyalkyl esters suitable for final reaction with the polyisocyanate formed from the polyol and diisocyanate are exemplified by hydroxyethyl acrylate, hydroxyethyl propyl acrylate, hydroxyethyl methacrylate, and hydroxypropyl methacrylate. Any acrylate or methacrylate ester or amide containing an isocyanate reactive group may be used herein, however.

Urethane poly(acrylates) such as the above are described in for example, U.S. Patents 3,700,643, 4,131,602, 4,213,837, and 3,772,404.

(7) A urethane poly(acrylate) characterized by the following empirical formula:

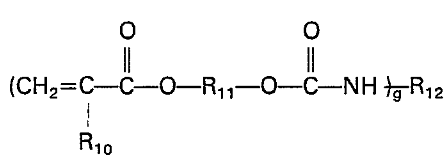

wherein $R_{10}$ is hydrogen or methyl; $R_{11}$ is a linear or branched alkylene or oxyalkylene radical having from 2

to 5 carbon atoms; $R_{12}$ is the polyvalent residue remaining after reaction of a substituted or unsubstituted polyisocyanate; and g has an average value of from 2 to 4. These compounds are typically the reaction products of a polyisocyanate with a hydroxyalkyl ester of acrylic or methacrylic acid using one equivalent of the hydroxyalkyl ester per isocyanate group.

Polyisocyanates suitable for preparing the urethane poly(acrylate) are well known in the art and include aromatic, aliphatic, and cycloaliphatic polyisocyanates. Some diisocyanates may be extended with small amounts of glycol to lower their melting point and provide a liquid diisocyanate.

Urethane poly(acrylates) such as the above are described in, for example, U.S. Patent 3,297,745 and British Patent 1,159,552.

(8) A half-ester or half-amide characterized by the following empirical formula:

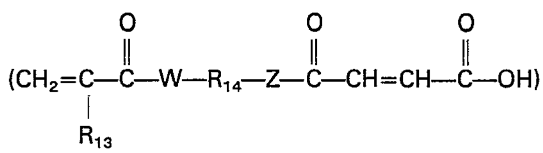

wherein $R_{13}$ is hydrogen or methyl; $R_{14}$ is an aliphatic or aromatic radical containing from 2 to 20 carbon atoms, optionally containing —O— or

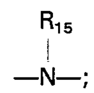

W and Z are independently —O— or

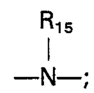

and $R_{15}$ is hydrogen or low alkyl. Such compounds are typically the half-ester or half-amide product formed by the reaction of a hydroxy, amino, or alkylamino containing ester or amide derivatives of acrylic or methacrylic acid with maleic anhydride, maleic acid, or fumaric acid. These are described in, for example, U.S. Patents 3,150,118 and 3,367,992.

(9) An unsaturated isocyanurate characterized by the following empirical formula:

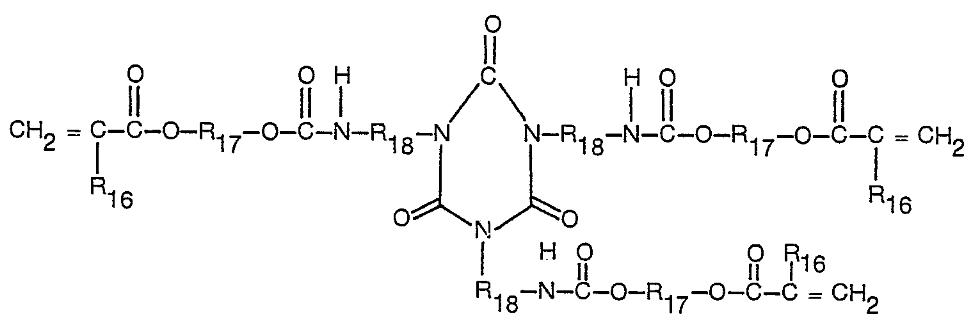

wherein $R_{16}$ is hydrogen or methyl, $R_{17}$ is a linear or branched alkylene or oxyalkylene radical having from 2 to 5 carbon atoms, and $R_{18}$ is a divalent radical remaining after reaction of a substituted or unsubstituted diisocyanate. Such products are typically produced by the trimerization reaction of a diisocyanate followed by reaction of the remaining free isocyanate groups with a hydroxyalkyl ester of acrylic or methacrylic acid.

It is understood that during the formation of the isocyanurate, a diisocyanate may participate in the formation of two isocyanurate rings thereby forming cross-linked structures in which the isocyanurate rings may be linked by the diisocyanate used. Polyisocyanates might also be used to increase this type of cross-link formation.

Diisocyanates suitable for preparing the isocyanaurate are well known in the art and include aromatic, aliphatic, and cycloaliphatic diisocyanates. Such diisocyanates may be extended with small amounts of glycols to lower their melting point and provide a liquid diisocyanate.

The hydroxyalkyl esters suitable for final reaction with the free isocyanurate groups remaining after trimerization of the diisocyanate to an isocyanurate are exemplified by hydroxyethyl acrylate, hydroxypropyl acrylate, hydroxethyl methacrylate, and hydroxpropyl methacrylate. Any acrylate or methacrylate ester or amide containing an isocyanate reactive group may be used herein, however.

Such unsaturated isocyanurates are described in, for example, U.S. Patent 4,195,146.

(10) Poly(amide-esters) as characterized by the following empirical formula:

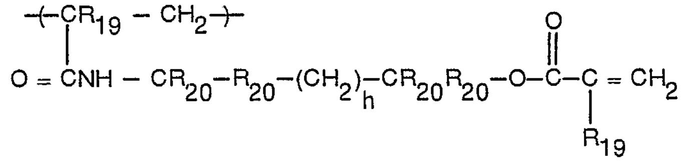

wherein $R_{19}$ is independently hydrogen or methyl, $R_{20}$ is independently hydrogen or lower alkyl, and h is 0 or 1. These compounds are typically the reaction product of a vinyl addition prepolymer having a plurality of pendant oxazoline or 5,6-dihydro-4H-1,3-oxazine groups with acrylic or methacrylic acid. Such poly(amide-esters) are described in, for example, British Patent 1,490,308.

(11) A poly(acrylamide) or poly(acrylate-acrylamide) characterized by the following empirical formula:

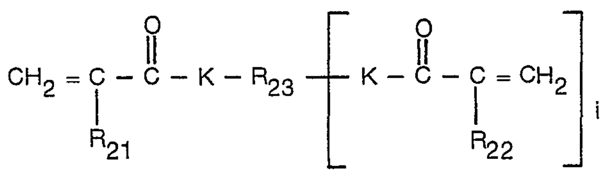

wherein $R_{23}$ is the polyvalent residue of an organic polyhydric amine or polyhydric aminoalcohol which contained primary or secondary amino groups bonded to different carbon atoms or, in the case of an aminoalcohol, amine and alcohol groups bonded to different carbon atoms; $R_{21}$ and $R_{22}$ are independently hydrogen or methyl; K is independently —O— or

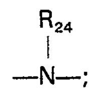

$R_{24}$ is hydrogen or lower alkyl; and i is 1 to 3.

The polyhydric amine suitable for preparing the poly(acrylamide) contains at least 2 carbon atoms and may contain 2 to 4, inclusive, terminal or pendant amine groups. The polyhydric amines include alkane polyamines and aromatic containing polyamines. Also included are amine terminated polyamides and polyamines containing ether, amino, and ester groups in the organic residue.

The polyhydric aminoalcohols suitable for preparing the poly(acrylate-acrylamide) contain at least 2 carbon atoms and may contain 2 to 4, inclusive, amino or alcohol groups, with the proviso that at least one group is a primary or secondary amine. These include alkane aminoalcohols and aromatic containing aminoalcohols. Also included are polyhydric aminoalcohols containing ether, amino, amide, and ester groups in the organic residue.

Examples of the above compounds are described in, for example, Japanese publications J80030502, J80030503, and J80030504 and in U.S. Patent 3,470,079 and British Patent 905,186.

It is understood by those skilled in the art that the thermosettable organic materials described, *supra*, are only representative of those which may be used in the practice of this invention.

Component (b) in the composition of this invention is hydroxyethyl acrylate or hydroxyethyl methacrylate. Mixtures of these may also be used.

Component (c) of this invention is styrene and one of its derivatives and one of its homologues.

Mixtures of the aforementioned monomers may be effectively employed in the practice of this invention.

In the preferred compositions of this invention component (a) is present in amounts of from 10 to 75, preferably from 25 to 60 weight percent; component (b) is present in amounts of from 2 to 75, preferably from 5 to 30 weight percent; and component (c) is present in amounts of from 10 to 75, preferably from 25 to 65 weight percent.

A free-radical initiator which initiates curing via the co-reaction of the thermosettable organic material, the acrylic or methacrylic acid or functionalized derivative thereof, and the ethylenically unsaturated monomer is included in the composition of this invention. These initiators include azo compounds, peroxides, peresters and perketals.

Azo and peroxide initiators are described by, for example, Gallagher et al. "Organic Peroxides Review, Plastics Design and Processing", July 1978, pages 38—42, and August 1978, pages 60—67, inclusive.

The choice of the specific peroxide or azo initiators for the purpose of curing the composition of this invention is within the purview of those having skill in this art and the manner in which such peroxides and azo initiators effect a desirable cure is generally characterized in the aforementioned articles.

Examples of such initiators include 1,1-di-t-butylperoxycyclohexane, 2,2-di-t-butylperoxybutane, 2,2-di-t-butylperoxy-4-methyl-pentane, 2,2-dicumylperoxypropane, butyl 2,2-di-t-butylperoxyvalerate, 1,1-bis(2,2,4-trimethylpentyl-2-peroxy)cyclohexane, 2,2'-azo-bis-butyronitrile, dibenzoyl peroxide, lauroyl peroxide, di-t-butyl peroxide, diisopropyl peroxide carbonate, t-butylperoxy-2-ethylhexanoate, t-butyl-perpivalate, 2,5-dimethylhexane-2,5-di-perethylhexanoate, t-butyl peroctoate, t-butyl perneodecanoate, t-butyl perbenzoate, t-butyl percrotonate, t-butyl perisobutyrate, di-t-butyl perphthalate, 1,1-bis(t-butylperoxy)-3,3,5-trimethylcyclohexane, bis(4-t-butylcyclohexyl)peroxydicarbonate, methyl ethyl ketone peroxide, 2,4-pentanedione peroxide, bis(t-butylperoxy)diisopropylbenzene, 2,4,4-trimethylpentyl-2-peroxycyclohexane carboxylate, 2-t-butylazo-2-cyano-4-methylpentane and ethyl 3,3-di(butylperoxy)butyrate. These are commercially available materials.

The peresters and perketals may be used in combination with an acid cure accelerator as described in Netherlands published Patent Application No. 7604405. These acids include Bronsted acids with a $pK_a$ value lower than or equal to that of formic acid, such as hydrochloric acid, sulfuric acid, nitric acid, phosphoric acid, trichloroacetic acid and p-toluene-sulfonic acid. Also, Lewis acids or metal halides with Lewis acid properties, such as boron trifluoride and the chlorides of iron, cobalt, zinc and aluminum, may be used.

Additionally, the above described initiators may be used in combination with other cure accelerators such as cobalt compounds. These cobalt compounds include cobalt naphthenate and cobalt-amine cure promoters (such as those designated as PEP 183—S and available from Air Products Incorporated). These cure accelerators operate by decomposing the curing catalysts at a temperature below their normal activation or decomposition temperature.

Mixtures of the initiators may be used herein, such as mixtures of peresters and/or perketals, of perketals and azo compounds, or of peresters and azo compounds.

The concentration of the initiator can be varied within wide limits. As a representative range, the concentration can vary from 0.25 to 3.0 weight percent, preferably from 0.5 to 2.5 weight percent, and most preferably, from 0.75 to 2.0 weight percent, based on the weight of components (a), (b) and (c).

The compositions of this invention are prepared by solution blending the thermosettable organic material, the acrylic or methacrylic acid or functionalized derivative thereof, the ethylenically unsaturated monomer, a free radical curing catalyst, and any other optional ingredients at ambient temperatures.

The fibers, which may be used in this invention as reinforcing agents, have a melting point or a glass transition temperature above 130°C. These fibers include fiberglass, carbon fibers, aromatic polyamide fibers (such as aramid fibers sold by E. I. duPont de Nemours & Company, Wilmington, Delaware, under the trademark of Kevlar), metal fibers, such as aluminum fibers, steel fibers and boron fibers.

The carbon fibers include those having a high Young's modulus of elasticity and high tensile strength. These carbon fibers may be produced from pitch, as described in U.S. Patents 3,976,729; 4,005,183 and 4,026,788, for example.

The preferred fibers are fiberglass, carbon fibers, aromatic polyamide fibers, and mixtures thereof.

The fibers which are suitable for use in this invention, preferably have a length of at least 6,35 mm (1/4 inch), and an average length of at least 12,7 mm (1/2 inch). Fibers with different lengths exceeding 6,35 mm (1/4 inch) may be used, provided that at least about 50 percent of the fibers have lengths greater than 12,7 mm (1/2 inch). Preferred fiber lengths are from 2,5 to 5,1 cm (1 to 2) or more inches. Continuous filaments may also be used.

It is also within the scope of this invention to include the use of fiber reinforcements of shorter lengths and also fillers such as milled glass.

The molded article contains from 10 to 75, preferably from 40 to 70 weight percent of the reinforcement fiber or from 20 to 40 weight percent of milled glass reinforcement.

It is furthermore desirable to utilize a vinyl polymerization inhibitor in those cases where the resin solution is to be stored and/or shipped. Suitable vinyl polymerization inhibitors are hydroquinone, para-benzoquinone, t-butyl catechol, quinhydrone, toluhydroquinone, mono-t-butyl hydroquinone, 2,5-di-t-butylhydroquinone, hydroquinone monomethyl ether and the biphenol derivatives described in U.S. Patent 4,158,027. The amount of inhibitor for the purpose of preventing vinyl polymerization can be that conventionally used, namely from 100 to 1000 ppm of the combined weight of components (a), (b) and (c).

As previously described, the preferred procedure for producing a molded article from the compositions of this invention is described in EP—A—80 102 354.0, *supra*.

In said EP—A—80 102 354.0 the apparatus comprises: (a) a heatable matched metal die mold containing one or more cavities therein with means for opening said mold to expose such cavities, and closing the same, and means for controlling the injection of a thermosettable organic liquid to such cavities when the mold is closed, (b) means associated with said mold, whereby one or more fibers in the form of an interlocked mass are provided in a portion of the cavities thereof when the mold is open to expose such cavities and prior to the injection of the thermosettable organic liquid to such cavities when the mold is closed, (c) accumulator means associated with said mold which can contain a thermosettable liquid transportable to means for controlling injection of said liquid to such cavities, and (d) cooling means associated with the means for controlling the injection of such liquid to such cavities, whereby the temperature of the liquid in such injection means is maintained substantially below the temperature of the mold.

## Examples

The following examples serve to illustrate specific embodiments of this invention and it is not intended that the invention shall be limited by the examples. Four general types of resins are used in the examples and include unsaturated polyesters, vinyl esters, maleate half-esters, and poly(acrylates). These resin types thus include a variety of oligomeric structures having different molecular weights, different types of unsaturation, and different levels and distribution of hydroxyl and carboxylic acid groups in the oligomer.

In the examples the flexural strength and modulus of the prepared composites were measured according to the procedure described in ASTM D—790. In each example, five separate flexural bars were tested from each plaque and the values listed are the average of those tests.

In each of the following examples, a thermocouple was inserted in the mold midway through the glass mat and the cure rate was observed by measuring the time from resin injection to the time of maximum exotherm in the resin. This time span is designated below as the time to peak exotherm and the time given is an average of several runs. The apparatus used was similar to that described in EP—A—80 102 354.0 described, *supra*.

In the Examples, the following designations are used:

Polyester resin 1 — A solution containing styrene and an unsaturated polyester prepared from maleic anhydride, phthalic acid, propylene glycol and diethylene glycol. The polyester has an acid number of about 25, and a number average molecular weight (Mn) of about 2400. This polyester is commercially available as USS 14107 polyester resin (available from U.S. Steel Corp.). It was diluted with styrene to form a 50/50 polyester/styrene solution used as Polyester resin 1.

Polyester resin 2 — A solution containing styrene and an unsaturated polyester prepared from maleic anhydride, phthalic acid, propylene glycol and dipropylene glycol. The polyester has an acid number of about 25, and Mn of about 1900. This polyester is commercially available as USS 13017 polyester resin (available from U.S. Steel Corp.). It was diluted with styrene to form a 50/50 polyester/styrene solution used as Polyester resin 2.

Polyester resin 3 — A solution containing styrene and an unsaturated polyester prepared from maleic anhydride, phthalic acid and propylene glycol. The polyester has an acid number of about 32, and Mn of about 1400. This polyester is commercially available as USS 13031 polyester resin (available from U.S. Steel Corp.). It was diluted with styrene to form a 50/50 polyester/styrene solution used as Polyester resin 3.

A variety of commercial vinyl ester resins, based primarily on diglycidyl polyethers of bisphenol A were used in the Examples. These resins are designated as follows in the examples:

Vinyl Resin 1 — A vinyl ester resin containing the reaction product of methacrylic acid with a mixture of diglycidyl polyethers of bisphenol A using approximately one mole of methacrylic acid per mole of epoxide groups. The number average molecular weight of the reaction product was approximately 900 to 1000. The vinyl ester resin is commercially available as a 50 percent styrene solution as Derakane 411—C50 (available from Dow Chemical Co.).

Vinyl resin 2 — This vinyl ester resin is similar to Vinyl resin 1 except that the vinyl ester has an Mn of 1100 to 1200. The vinyl ester was again the reaction product of methacrylic acid and a mixture of diglycidyl polyethers of bisphenol A. A 45 percent styrene solution of this vinyl ester is commercially available as Derakane 411—45 (available from Dow Chemical Co.). The commercial resin was diluted to a 50 percent styrene solution to form Vinyl resin 2.

Vinyl resin 3 — A vinyl ester resin containing the reaction product of methacrylic acid with a mixture of diglycidyl polyethers of bisphenol A and glycidyl ethers of novolac resins using approximately one mole of methacrylic acid per mole of epoxide groups. The vinyl ester is commercially available as a 36 percent styrene solution as Derakane 470—36 (available from Dow Chemical Co.). The commercial resin was diluted to a 50 percent styrene solution to form Vinyl resin 3.

Vinyl resin 4 — This vinyl rester resin is similar to Vinyl resin 1. The vinyl ester resin is commercially available as a 50 percent styrene solution as Epocryl 321 (available from Shell Chemical Co.).

Vinyl resin 5 — This vinyl ester resin is similar to Vinyl resin 1 except that the vinyl ester has an Mn of 1300 to 1400. The vinyl ester is commercially available as a 45 percent styrene solution as Epocryl 322 (available from Shell Chemical Co.). The commercial resin was diluted to a 50 percent styrene solution to form Vinyl resin 5.

Vinyl resin 6 — A modified vinyl ester resin containing in part, the reaction product of methacrylic acid with a mixture of glycidyl polyethers of bisphenol A using approximately one mole of methacrylic acid per mole of epoxide groups. The polyester is commercially available as a 40 percent styrene solution as Epocryl 480 (available from Shell Chemical Co.). The commercial resin was diluted to a 50 percent styrene solution to form Vinyl resin 6.

The following maleate half ester resins were used:

Maleate half ester resin 1 — A maleate half ester prepared from 75 parts by weight of 2,2,4-trimethyl-1,3-pentane diol, 25 parts by weight of propylene glycol, and 165 parts by weight of maleic anhydride. The maleate half ester was diluted to produce a 50 percent styrene resin solution that contained about 1 percent of maleic anhydride.

Maleate half ester resin 2 — A maleate half ester prepared from 75 parts by weight of 2,2,4-trimethyl-1,3-pentane diol, 25 parts by weight of polycaprolactone triol having a molecular weight of 540 and an

hydroxyl number of 310, and 114 parts by weight of maleic anhydride. The maleate half ester was diluted to produce a 50 percent styrene resin solution that contained about 1 percent of maleic anhydride.

Poly(acrylates) based on dimethacrylates and diacrylates were also used and are described in the examples.

Control A

About 200 grams [approximately ten 25,4 cm × 14,0 cm (10 × 5½ inch) sheets] Type AKM glass mat (PPG Industries, Inc., Pittsburgh, Pennsylvania) was placed in a 25,4 cm × 14,0 cm × 4,8 mm (10 × 5½ × 3/16 inch) constant volume mold preheated to 140°C. The mold was closed, evacuated for about 5 seconds, and a resin portion containing 50 weight percent ethoxylated bisphenol A dimethacrylate, 50 weight percent styrene, 0.5 phr Zelec UN mold release and 1.5 phr of Trigonox 29—B—75* was injected at a pressure of 20,7 bar (300 psi) into the mold. The pressure was maintained for a dwell period of 10 seconds. A time to peak exotherm of about 64 seconds was measured. After 89 seconds, the cured glass reinforced composite was removed from the mold. The composite contained 67 weight percent glass as determined by ashing.

The composite was tested for flexural strength and modulus.

The results are shown in Table 1.

Control B

The procedure of Control A was repeated except that the resin contained the following ingredients:
50 wt. percent ethoxylated bisphenol A dimethacrylate,
28 wt. percent styrene,
22 wt. percent ethyl acrylate,
1.5 phr Trigonox 29—B—75,* and
0.5 phr Zelec UN mold release.

A time to peak exotherm of about 64 seconds was observed.

The cured composite was removed from the mold after 90 seconds and tested as described in Control A.

The results are shown in Table I.

Example 1

The procedure of Control A was repeated except that the resin contained the following ingredients:
50 wt. percent ethoxylated bisphenol A dimethacrylate,
28 wt. percent styrene,
22 wt. percent 2-hydroxyethyl acrylate,
1.5 phr Trigonox 29—B—75, and
0.5 phr Zelec UN mold release.

A time to peak exotherm of about 48 seconds was observed.

The cured composite was removed from the mold after 64 seconds and tested as described in Control A.

The results are shown in Table I.

Example 2

The procedure of Control A was repeated except that the resin contained the following ingredients:
50 wt. percent ethoxylated bisphenol A dimethacrylate,
28 wt. percent styrene,
22 wt. percent 2-hydroxyethyl methacrylate,
1.5 phr Trigonox 29—B—75, and
0.5 phr Zelec UN mold release.

A time to peak exotherm of about 59 seconds was observed.

The cured composite was removed from the mold after 90 seconds and tested as described in Control A.

The results are shown in Table I.

* comprises 1,1-di-t-butylperoxy-3,3,5-trimethyl cyclohexane

TABLE I

| Example | Ingredients[1] | Wt. % | Time to Peak Exotherm (s) | Molding Time (sec.) | Wt. % glass | Properties of Composite Flexural (MPa) Strength (psi) | Flexural ($10^3$ MPa) Modulus ($10^6$ psi) |
|---|---|---|---|---|---|---|---|
| Control A | EBAM | 50 | 64 | 89 | 67 | 150.3 | 11.9 |
| | Styrene | 50 | | | | (21,800) | (1.72) |
| Control B | EBAM | 50 | | | | 102.8 | 7.03 |
| | Styrene | 28 | 64 | 90 | 68 | (14,900) | (1.02) |
| | EA | 22 | | | | | |
| 1 | EBAM | 50 | | | | 272 | 14.4 |
| | Styrene | 28 | 48 | 64 | 65 | (39,500) | (2.09) |
| | HEA | 22 | | | | | |
| 2 | EBAM | 50 | | | | 245 | 13.4 |
| | Styrene | 28 | 59 | 90 | 67 | (35,500) | (1.95) |
| | HEMA | 22 | | | | | |

[1]EBAM = ethoxylated bisphenol A dimethacrylate
EA = ethyl acrylate
HEA = 2-hydroxyethyl acrylate
HEMA = 2-hydroxyethyl methacrylate

Control C

The procedure of Control A was exactly repeated except that the resin contained the following ingredients:

50 wt. percent of ethoxylated bisphenol A diacrylate,
50 wt. percent of styrene,
1.5 phr of Trigonox 29—B—75, and
0.5 phr of Zelec UN mold release.

A time to peak exotherm of about 56 seconds was observed.

The cured composite was removed from the mold after 71 seconds and tested as described in Control A.

The results are shown in Table II.

Example 3

The procedure of Control A was exactly repeated except that the resin contained the following ingredients:

50 wt. percent of ethoxylated bisphenol A diacrylate,
28 wt. percent of styrene,
22 wt. percent of 2-hydroxyethyl acrylate,
1.5 phr of Trigonox 29—B—75, and
0.5 phr of Zelec UN mold release.

A time to peak exotherm of about 45 seconds was observed.

The cured composite was removed from the mold after 61 seconds and tested as described in Control A.

The results are shown in Table II.

Example 4

The procedure of Control A was exactly repeated except that the resin contained the following ingredients:

50 wt. percent of ethoxylated bisphenol A diacrylate,
50 wt. percent of styrene,
22 wt. percent of 2-hydroxyethyl methacrylate,
1.5 phr of Trigonox 29—B—75, and
0.5 phr of Zelec UN mold release.

A time to peak exotherm of about 59 seconds was observed.

The cured composite was removed from the mold after 77 seconds and tested as described in Control A.

The results are shown in Table II.

Control D

The procedure of Control A was exactly repeated except that the resin contained the following ingredients:

50 wt. percent of diethylene glycol diacrylate,
50 wt. percent of styrene,
1.5 phr of Trigonox 29—B—75, and
0.5 phr of Zelec UN mold release.

A time to peak exotherm of about 51 seconds was observed.

The cured composite was removed from the mold after 67 seconds and tested as described in Control A.

The results are shown in Table II.

Example 5

The procedure of Control A was exactly repeated except that the resin contained the following ingredients:

50 wt. percent of diethylene glycol diacrylate,
28 wt. percent of styrene,
22 wt. percent of 2-hydroxyethyl acrylate,
1.5 phr of Trigonox 29—B—75, and
0.5 phr of Zelec UN mold release.

A time to peak exotherm of about 33 seconds was observed.

The cured composite was removed from the mold after 52 seconds and tested as described in Control A.

The results are shown in Table II.

TABLE II

| Example | Ingredients[1] | Wt. % | Time to Peak Exotherm (s) | Molding Time (sec.) | Wt. % glass | Properties of Composite Flexural (MPa) Strength (psi) | Flexural ($10^3$ MPa) Modulus ($10^6$ psi) |
|---|---|---|---|---|---|---|---|
| Control C | EBAA | 50 | 56 | 71 | 68 | 122 | 8.27 |
| | Styrene | 50 | | | | (17,700) | (1.20) |
| 3 | EBAA | 50 | | | | 260 | 13.6 |
| | Styrene | 28 | 45 | 61 | 63 | (37,800) | (1.97) |
| | HEA | 22 | | | | | |
| 4 | EBAA | 50 | | | | 257 | 14.3 |
| | Styrene | 28 | 59 | 77 | 66 | (37,300) | (2.08) |
| | HEMA | 22 | | | | | |
| Control D | DEGDA | 50 | | | | 108 | 7.9 |
| | Styrene | 50 | 51 | 67 | 69 | (15,600) | (1.15) |
| 5 | DEGDA | 50 | | | | 174 | 11.5 |
| | Styrene | 28 | 33 | 52 | 63 | (25,200) | (1.67) |
| | HEA | 22 | | | | | |

[1]EBAA = ethoxylated bisphenol A diacrylate
HEA = 2-hydroxyethyl acrylate
HEMA = 2-hydroxyethyl methacrylate
DEGDA = diethylene glycol diacrylate

The following Examples 6—8 illustrate the use of a combination of dimethacrylates.

Example 6

The procedure of Control A was exactly repeated except that the resin contained the following ingredients:

25 wt. percent of ethoxylated bisphenol A dimethacrylate,
25 wt. percent of diethylene glycol dimethacrylate,
28 wt. percent of styrene,
22 wt. percent of 2-hydroxylethyl acrylate,
1.5 phr of Trigonox 29—B—75, and
0.5 phr of Zelec UN mold release.

A time to peak exotherm of about 41 seconds was observed.

The cured composite was removed from the mold after 63 seconds. The composite so formed contained 65 wt. percent of glass.

The flexural strength of the composite was 227 MPa (32,900 psi) and the flexural modulus was 12,5 × $10^3$ MPa (1.81 × $10^6$ psi).

Example 7

The procedure of Control A was exactly repeated except that the resin contained the following ingredients:

25 wt. percent of ethoxylated bisphenol A diacrylate,
25 wt. percent of diethylene glycol diacrylate,
28 wt. percent of styrene,
22 wt. percent of 2-hydroxyethyl acrylate,
1.5 phr of Trigonox 29—B—75, and
0.5 phr of Zelec UN mold release.

A time to peak exotherm of about 40 seconds was observed.

The cured composite was removed from the mold after 61 seconds. The composite so formed contained 65 wt. percent of glass.

The flexural strength of the composite was 240 MPa (34,900 psi) and the flexural modulus was 13,1 × $10^3$ MPa (1.90 × $10^6$ psi).

Example 8

The procedure of Control A was exactly repeated except that the resin contained the following ingredients:

25 wt. percent of ethoxylated bisphenol A diacrylate,
25 wt. percent of diethylene glycol diacrylate,
28 wt. percent of styrene,
22 wt. percent of 2-hydroxyethyl methacrylate,
1.5 phr of Trigonox 29—B—75, and
0.5 phr of Zelec UN mold release.

A time to peak exotherm of about 55 seconds was observed.

The cured composite was removed from the mold after 90 seconds. The composite so formed contained 64 wt. percent of glass.

The flexural strength of the composite was 252 MPa (36,600 psi) and the flexural modulus was 13,6 × $10^3$ MPa (1.97 × $10^6$ psi).

**Claims**

1. A curable molding composition suitable for the rapid fabrication of fiber-reinforced thermoset resin articles having improved mechanical properties which comprises a mixture of:

(a) a thermosettable organic material containing two or more polymerizable carbon-carbon double bonds,

(b) 2-hydroxyethyl acrylate and/or 2-hydroxyethyl methacrylate and

(c) styrene and/or at least one of its derivatives and/or at least one of its homologues.

2. A curable composition as defined in claim 1 wherein compound (b) is present in amounts of from 2 to 75 weight percent based on the total weight of (a), (b) and (c).

3. A curable composition as defined in claim 1 and/or claim 2 wherein component (c) is present in amounts of from 10 to 75 weight percent based on the total weight of (a), (b) and (c).

4. A curable composition as defined in any one of the preceding claims which contains an initiator.

5. A curable composition as defined in claim 4 wherein the initiator is a perester and/or perketal (or a mixture of peresters and/or perketals) or an azo and/or peroxide containing compound or a mixture of an azo compound and a perester and/or perketal.

6. A curable composition as defined in claim 4 or 5 which contains an acidic cure accelerator.

7. A curable composition as defined in any one of the claims 4 to 6 which contains an accelerator comprising a cobalt containing compound.

8. A molded article prepared from the composition of any one of the preceding claims.

9. A molded article as defined in claim 8 which contains from 10 to 75 weight percent of one or more fibers having a melting point or a glass transition temperature above about 130°C, preferably fiberglass, carbon fibers, aromatic polyamide fibers, and mxitures thereof.

10. A process for producing a fiber reinforced article which comprises the steps of (a) providing in a heatable matched metal die mold, a bonded web of one or more of said fibers having a melting point or a glass transition temperature above 130°C, (b) providing in an accumulator zone, a liquid body of a thermosettable organic material having a viscosity determined at 120°C, in the absence of curing agent therefore, of less than about 50 mPa.s, and which is curable upon heating to a thermoset resin composition, the viscosity of said liquid body being maintained essentially constant in the accumulator zone by keeping

its temperature below that at which curing of said material is substantial, (c) closing said mold containing said web, (d) injecting at least a portion of said thermosettable organic material under pressure from said accumulator zone into the mold to thereby fill the cavity in said mold, (e) initiating the curing of said materials by subjecting the materials to a temperature by heating the mold, which is above the temperature at which the curing of said materials is initiated, and (f) opening said mold and removing the cured thermoset article therefrom, characterized in using a resin composition according to claim 1.

**Patentansprüche**

1. Härtbare Formmasse, die zue schnellen Herstellung faserverstärkter, wärmegehärteter Harzgegenstände mit verbesserten mechanischen Eigenschaften geeignet ist und die eine Mischung aus

(a) einem Wärmehärtbaren organischen Material, das zwei oder mehrere polymerisierbare Kohlenstoff-Kohlenstoff-Doppelbindungen enthält

(b) 2-Hydroxyethylacrylat und/oder 2-Hydroxyethylmethacrylat und

(c) Styrol und/oder mindestens eines seiner Derivate und/oder mindestens eines seiner Homologen umfaßt.

2. Härtbare Masse nach Anspruch 1, worin Verbindung (b) in Mengen von 2 bis 75 Gew.-%, bezogen auf das Gesamtgewicht aus (a), (b) und (c), anwesend ist.

3. Härtbare Zusammensetzung gemäß Anspruch 1 und/oder 2, worin Komponente (c) in Mengen von bis 75 Gew.-%, bezogen auf das Gesamtgewicht aus (a), (b) und (c), anwesend ist.

4. Härtbare Zusammensetzung nach einem der vorhergehenden Ansprüche, die einen Initiator enthält.

5. Härtbare Zusammensetzung nach Anspruch 4, worin der Initiator ein Perester und/oder Perketal (oder eine Mischung aus Perestern und/oder Perketalen) oder eine Azo- und/oder Peroxidgruppe(n) enthaltenden Verbindung oder eine Mischung einer Azoverbindung une eines Peresters und/oder Perketals ist.

6. Härtbare Zusammensetzung nach Anspruch 4 oder 5, die einen sauren Aushärtungsbeschleuniger enthält.

7. Härtbare Zusammensetzung nach einem der Ansprüche 4 bis 6, die einen Beschleuniger enthält, der eine kobalthaltige Verbindung umfaßt.

8. Formkörper, hergestellt aus der Masse nach einem der vorhergehenden Ansprüche.

9. Formkörper nach Anspruch 8, der 10 bis 75 Gew.-% einer oder mehrerer Fasern mit einem Schmelzpunkt oder einer Glasübergangstemperatur über etwa 130°C, vorzugsweise Glasfaser, Kohlenstoff-Fasern, Fasern aus aromatischem Polyamid bzw. Mischungen derselben, enthält.

10. Verfahren zur Herstellung eines faserverstärkten Gegenstandes, das die Stufen umfaßt

(a) Ausbildung einer verbundenen Bahn aus einer oder mehreren der Fasern mit einem Schmelzpunkt oder einer Glasübergangstemperatur über 130°C in einer erhitzbaren Formstanzenpresse,

(b) Bereithalten einer flüssigen Menge eines wärmehärtbaren organischen Materials mit einer Viskosität von weniger als etwa 50 mPa.s, bestimmt bei 120°C, in Anwesenheit eines Aushärtungsmittels dafür, das durch Erhitzen zu einer wärmegehärteten Harzmasse aushärtbar ist, in einer Akkumulatorzone, wobei die Viskosität dieser flüssigen Menge in der Akkumulatorzone praktisch konstant gehalten wird, indem man deren Temperatur unterhalb derjenigen hält, bei welcher ein erhebliches Aushärten dieser Materialien auftritt,

(c) Schließen der die Bahn enthaltenden Presse,

(d) Einspritzen mindestens eines Teils des wärmehärtbaren organischen Materials unter Druck aus der Akkumulatorzone in die Presse zwecks Füllung des Hohlraumes derselben,

(e) Einleiten der Aushärtung dieser Materialien, indem man die Materialien durch Erhitzen der Presse einer Temperatur oberhalb derjenigen, bei welcher die Aushärtung der Materialien eingeleitet wird, unterwirft, und

(f) Öffnen der Presse und Herausnehmen des ausgehärteten, wärmegehärteten Gegenstandes, dadurch gekennzeichnet, daß eine Harzmasse gemäß Anspruch 1 verwendet wird.

**Revendications**

1. Composition à mouler durcissable qui convient à la production rapide d'articles en résine thermodurcie renforcée par des fibres ayant de très bonnes propriétés mécaniques, qui comprend un mélange:

(a) d'une matière organique thermodurcissable contenant deux ou plus de deux doubles liaisons carbone-à-carbone polymérisables,

(b) d'acrylate de 2-hydroxyéthyle et/ou de méthacrylate de 2-hydroxyéthyle et

(c) de styrène et/ou d'au moins l'un de ses dérivés et/ou d'au moins l'un de ses homologues.

2. Composition durcissable suivant la revendication 1, dans laquelle le composé (b) est présent en quantités de 2 à 75% en poids sur la base du poids total de (a), (b) et (c).

3. Composition durcissable suivant la revendication 1 et/ou la revendication 2, dans laquelle le composant (c) est présent en quantités de 10 à 75% en poids sur la base du poids total de (a), (b) et (c).

4. Composition durcissable suivant l'une quelconque des revendications précédentes, qui contient un initiateur.

5. Composition durcissable suivant la revendication 4, dans laquelle l'initiateur est un perester et/ou un percétal (ou un mélange de peresters et/ou de percétals) ou un composé azoïque et/ou un composé contenant un peroxyde ou un mélange d'un composé azoïque et d'un perester et/ou d'un percétal.

6. Composition durcissable suivant la revendication 4 ou 5, qui contient un accélérateur acide de durcissement.

7. Composition durcissable suivant l'une quelconque des revendications 4 à 6, qui contient un accélérateur comprenant un composé qui contient du cobalt.

8. Article moulé produit à partir de la composition suivant l'une quelconque des revendications précédentes.

9. Article moulé suivant la revendication 8, qui contient 10 à 75% en poids d'une ou plusieurs fibres ayant un point de fusion ou une température de transition vitreuse au-dessus d'environ 130°C, de préférence du verre en fibre, des fibres de carbone, des fibres de polyamides aromatiques et leurs mélanges.

10. Procédé de production d'un article renforcé à la fibre, qui comprend les étapes consistant (a) à placer dans un moule métallique en deux parties pouvant être chauffé une bande liée d'une ou plusieurs desdites fibres ayant un point de fusion ou une température de transition vitreuse au-dessus de 130°C, (b) à placer dans une zone d'accumulation une masse liquide d'une matière organique thermodurcissable ayant une viscosité, déterminée à 120°C, en l'absence d'agent de durcissement correspondant, de moins d'environ 50 mPa.s et durcissable par chauffage en formant une composition de résine thermodurcie, la viscosité de ladite masse liquide étant maintenue essentiellement constante dans la zone d'accumulation par maintien de sa température au-dessous de celle à laquelle le durcissement desdites matières est notable, (c) à fermer le moule contenant ladite bande, (d) à injecter au moins une portion de ladite matière organique thermodurcissable sous pression depuis la zone d'accumulation dans le moule pour remplir ainsi la cavité de ce dernier, (e) à déclencher le durcissement desdites matières en les exposant par chauffage du moule à une température qui est au-dessus de la température à laquelle le durcissement desdites matières est déclenché, et (f) à ouvrir le moule et à en retirer l'article thermodurci, caractérisé par l'utilisation d'une composition de résine suivant la revendication 1.